# EUROPÄISCHE PATENTANMELDUNG

(11) **EP 3 376 056 A1**
(43) Veröffentlichungstag der Anmeldung: **19.09.2018**
(21) Anmeldenummer: 18159340.1
(22) Anmeldetag: 01.03.2018
(51) Int. Cl.: F16B 1/00, F16B 31/02

(54) **KONTROLLELEMENT MIT SPANNKRAFTKONTROLLE UND BEFESTIGUNGSANORDNUNG**

(30) Priorität: 14.03.2017 DE 102017105428; 17.11.2017 DE 102017127134
(71) Anmelder: fischerwerke GmbH & Co. KG, 72178 Waldachtal (DE)
(72) Erfinder: Linka, Martin, 72160 Horb a.N. (DE); Lehmann, David, 72275 Alpirsbach (DE); Hirschle, Tobias, 72160 Horb a.N. (DE)
(74) Vertreter: Lehmann, David

(57) **Zusammenfassung**

Die Erfindung betrifft ein Kontrollelement (1) mit Spannkraftkontrolle eines kraftkontrolliert aufspreizbaren Befestigungselements (2). Das Kontrollelement (1) umfasst ein erstes Spannelement (5) und ein zweites Spannelement (6), die mittels des Befestigungselements (2) gegeneinander verspannbar sind. Das erste Spannelement (5) weist eine konkave Grundfläche (12) auf, die dem zweiten Spannelement (6) zugewandt ist, das in einem Grundzustand derart an dem zweiten Spannelement (6) anliegt, dass sich der Durchmesser des ersten Spannelements (5) vergrößert, wenn die Spannelemente (5, 6) gegeneinander verspannt werden. An den Spannelementen (5, 6) sind zwei Markierungen zur Anzeige der wirkenden Spannkraft angeordnet: Eine erste Markierung (18) markiert eine minimal zu erreichende Spannkraft und eine zweite Markierung (19) markiert eine maximal zu erreichende Spannkraft.

## Beschreibung

Die Erfindung betrifft ein Kontrollelement mit Spannkraftkontrolle mit den Merkmalen des Oberbegriffs des Anspruchs 1, sowie eine Befestigungsanordnung nach Anspruch 10.

Ein gattungsgemäßes Kontrollelement ist aus der Offenlegungsschrift DE 30 22 011 A1 bekannt. Die Figuren 2a und 2b dieser Offenlegungsschrift zeigen eine Befestigungsanordnung mit einem kraftkontrolliert aufspreizbaren Spreizanker, der mit seinem Spreizteil in ein Bohrloch eingebracht worden ist, und bei dem zwischen einem zu befestigenden Anbauteil und einem Kopf eines Gewindebolzens des Spreizankers eine Unterlegscheibe und eine gewölbte Scheibe angeordnet sind, als Spannelemente eines Kontrollelements zur Kontrolle der im Spreizanker wirkenden Setzkraft. Zur Verankerung des Spreizankers im Bohrloch wird der Gewindebolzen in eine Konusmutter eingedreht, wodurch die Konusmutter zum Kopf des Gewindebolzens hin in eine Spreizhülse hinein bewegt wird. Dadurch wird die Spreizhülse aufgespreizt und gegen die Wand des Bohrlochs verspannt. Zudem wird die Unterlegscheibe gegen die gewölbte Scheibe verspannt. Durch weiteres Eindrehen des Gewindebolzens wird die Spreizhülse mit ausreichender Kraft planmäßig gegen die Wand des Bohrlochs verspannt und die Unterlegscheibe zum Anbauteil hin bewegt, wodurch die gewölbte Scheibe axial zusammengedrückt wird. Dabei wirkt im Gewindebolzen eine Zugkraft. Diese Zugkraft wird auch Setzkraft genannt. Zum planmäßigen Verankern des Spreizankers muss die Setzkraft einen bestimmten Wert erreichen. Ist dieser Wert erreicht, so wird die Spreizhülse mittels der Konusmutter mit ausreichend hoher Kraft gegen die Bohrlochwand gepresst. Bei dem aus der genannten Offenlegungsschrift bekannten Kontrollelement ist beim Erreichen dieses Sollwerts die anfangs gewölbte Scheibe eben, was einem Anwender signalisieren soll, dass die planmäßig erforderliche Setzkraft erreicht ist.

Allerdings ist es für einen Anwender schwierig festzustellen, wann genau die anfangs gekrümmte Scheibe eben gedrückt ist. In der Offenlegungsschrift DE 31 42 432 A1 wird daher vorgeschlagen, die gewölbte Scheibe so zu modifizieren, dass das Erreichen des ebenen Zustands und somit das Erreichen der gewünschten Setzkraft besser wahrgenommen werden kann: An der anfangs gewölbten Scheibe soll ein Abschnitt des Umfangs weggeschnitten und zusätzlich eine plastisch verformbare Masse an der der Unterlegscheibe zugewandten konkaven Grundfläche der anfangs gewölbten Scheibe angebracht werden, die beim Erreichen des ebenen Zustands am Umfang austritt.

Bei den bekannten Kontrollelementen ist allerdings eine Aussage darüber, ob und in welchem Maß die planmäßig zu erreichende Setzkraft überschritten ist, nicht möglich. Dies ist von Nachteil, da eine zu große Setzkraft die vom Spreizanker aufnehmbare Last reduziert und im Extremfall zu einem vorzeitigen Versagen des Spreizankers führen kann.

Aufgabe der Erfindung ist es daher, das Kontrollelement so zu verbessern, dass ein sicheres Verankern eines Spreizankers möglich ist.

Diese Aufgabe wird erfindungsgemäß durch ein Kontrollelement mit den Merkmalen des Anspruchs 1 gelöst. Das erfindungsgemäße Kontrollelement mit Spannkraftkontrolle umfasst ein erstes und ein zweites Spannelement. Unter "Spannelement" ist hier insbesondere ein scheibenartiges Element zu verstehen, dessen Dicke im Verhältnis zu seiner Länge und Breite beziehungsweise zu seinem Durchmesser klein ist. Die Dicke des Spannelements kann konstant sein, sie kann aber auch variieren. Mit "Spannelement" ist insbesondere eine Unterlegscheibe oder eine Tellerfeder gemeint, wobei die Außenkontur der Spannelemente nicht rund sein muss, sondern beispielsweise rechteckig, sechseckig oder oval sein kann. Ein scheibenartiges Spannelement kann aber auch mit einem weiteren Element einstückig verbunden sein, beispielsweise als angeprägte Scheibe an einer Mutter. Die Spannelemente sind derart zueinander angeordnet, dass sie mittels eines Befestigungselements gegeneinander verspannbar sind. Jedes der Spannelemente weist eine Durchgangsöffnung für das Befestigungselement sowie zwei Grundflächen und einen umlaufenden Rand auf. Jede der Durchgangsöffnungen durchdringt die Grundflächen des jeweiligen Spannelements und ist insbesondere mittig am jeweiligen Spannelement angeordnet, wie dies beispielsweise auch von herkömmlichen Unterlegscheiben und Tellerfedern bekannt ist. Zumindest eines der Spannelemente ist in einem unverspannten Zustand gewölbt. Dieses erste Spannelement weist somit eine Grundfläche auf, die konkav gekrümmt ist, und eine andere Grundfläche, die konvex gekrümmt ist. Die Begriffe "konvex" und "konkav" beziehen sich hier allerdings nicht nur auf stetig gekrümmte Flächen. Sie schließen insbesondere nicht aus, dass das Spannelement abschnittsweise gerade Abschnitte aufweist und beispielsweise U- oder V-förmig ausgebildet ist. "Gekrümmt" umfasst somit insbesondere auch ein "gebogenes" oder "geknicktes" Spannelement. Das erste Spannelement kann beispielsweise einachsig gekrümmt sein, beispielsweise in der Art einer Blattfeder, oder beispielsweise mehrachsig oder räumlich gekrümmt, beispielsweise in der Art einer Tellerfeder. Die beiden Spannelemente sind derart zueinander angeordnet, dass die konkave Grundfläche des ersten Spannelements dem zweiten Spannelement zugewandt ist und in einem Grundzustand derart an dem zweiten Spannelement anliegt, dass sich der Durchmesser des ersten Spannelements vergrößert, wenn die Spannelemente gegeneinander verspannt werden. Der "Grundzustand" ist der Zustand, in dem die Spannelemente planmäßig aneinander anliegen, ohne durch eine äußere Kraft gegeneinander verspannt zu sein. Dies ist insbesondere dann der Fall, wenn ein Befestigungselement durch die Durchgangsöffnungen hindurchgeführt, aber noch nicht gegen das Kontrollelement verspannt ist. Mit "Durchmesser" ist hier der Durchmesser eines Spannelements mit kreisförmiger Grundfläche oder, bei Spannelementen mit nicht-kreisförmigen Grundflächen, der Durchmesser eines das erste Spannelement umschreibenden Umkreises gemeint.

Erfindungsgemäß sind an den Spannelementen zwei Markierungen angeordnet, derart, dass eine der Markierungen eine minimal zu erreichende Spannkraft und die andere Markierung eine maximal zu erreichende Spannkraft markiert. Mit "Spannkraft" ist die Kraft gemeint, die zwischen den Spannelementen wirkt, wenn die Spannelemente gegeneinander verspannt werden. Die wirkende Spannkraft entspricht der Setzkraft, die in einem dem Kontrollelement zugeordneten Befestigungselement wirkt, so dass die minimal zu erreichende Spannkraft der minimal zu erreichenden Setzkraft und die maximal zu erreichende Spannkraft der maximal zu erreichenden Setzkraft des zugeordneten Befestigungselements entspricht. Anders ausgedrückt: Eine Markierung des Kontrollelements markiert die minimal zu erreichende Setzkraft des zugeordneten Befestigungselements und die andere Markierung die maximal zu erreichende Setzkraft des zugeordneten Befestigungselements. Die minimal zu erreichende Setzkraft ist die Setzkraft, bei der das Befestigungselement planmäßig funktioniert, d.h. beispielsweise bei einem kraftkontrolliert aufspreizbaren Spreizanker ist es die im Spreizanker wirkende Zugkraft, bei der die Spreizhülse planmäßig gegen die Wand eines Bohrlochs gedrückt wird, sodass der zugeordnete Spreizanker eine von außen wirkende Last planmäßig aufnehmen und sicher in den Verankerungsgrund ableiten kann. Dagegen ist die maximal zu erreichende Setzkraft die Setzkraft, die nicht überschritten werden darf, um eine Vorschädigung oder eine Reduktion der vom zugeordneten Spreizanker aufnehmbaren Last zu vermeiden. Mit "zugeordnet" ist gemeint, dass das Kontrollelement geometrisch derart ausgebildet und hinsichtlich des verwendeten Materials so ausgelegt ist, dass es auf die minimale und maximale planmäßige Setzkraft eines bestimmten Befestigungselements abgestimmt ist, mit dem es zur Verwendung vorgesehen ist. Dies schließt nicht aus, dass ein Kontrollelement mit verschiedenen Befestigungselementen verwendet werden kann, die die gleichen planmäßigen Setzkräfte aufweisen. Eine Markierung kann beispielsweise eine Nut, eine die Grundflächen durchdringende Öffnung, eine Farbmarkierung oder auch der Rand eines der Spannelemente sein, wobei diese Aufzählung andere mögliche Formen einer Markierung nicht ausschließt. Die beiden Markierungen sind derart angeordnet, dass sie zumindest im planmäßig verspannten Zustand, also wenn die Setzkraft größer oder gleich der minimal zu erreichenden Setzkraft und kleiner oder gleich der maximal zu erreichenden Setzkraft ist, voneinander beabstandet sind. Insbesondere sind die Markierungen in radialer Richtung, bezogen auf die Längsachse der Durchgangsöffnungen beziehungsweise eines durch die Durchgangsöffnung durchgeführten Befestigungselements, voneinander beanstandet. Der Abstand der beiden Markierungen beträgt insbesondere mehrere Millimeter, um ein gutes Ablesen zu ermöglichen. Insbesondere ist der Abstand größer als 2 Millimeter, insbesondere größer als drei Millimeter. Die Längsachse steht im Wesentlichen senkrecht zu einem ebenen beziehungsweise eben flachgedrückten Spannelement und verläuft durch die Mittelpunkte der Durchgangsöffnungen. Die Markierungen können beide an dem gleichen Spannelement angeordnet sein. Alternativ kann auch jeweils eine Markierung an einem der Spannelemente angeordnet sein. Zudem ist die Anbringung mehrerer Teilmarkierungen möglich, die gemeinsam als eine Markierung für eine bestimmte Setzkraft wirken. Durch das Anbringen der beiden Markierungen kann ein Anwender sicher ablesen, wann das Kontrollelement planmäßig verspannt und somit der Montagevorgang des Befestigungselements beendet ist. Eine Montage des Befestigungselements mit einer zu geringen oder einer zu großen Setzkraft kann durch die Verwendung des erfindungsgemäßen Kontrollelements vermieden werden.

Vorzugsweise ist eine erste der Markierungen auf einer Grundfläche eines der Spannelemente angeordnet, was ein einfaches Ablesen der Markierung ermöglicht. Insbesondere ist die Grundfläche im eingebauten Zustand, wenn das Kontrollelement mit einem Befestigungselement direkt oder indirekt gegen ein Anbauteil und/oder einen Verankerungsgrund verspannt ist, auf der dem Anbauteil und/oder dem Verankerungsgrund abgewandten Grundfläche des Spannelements angeordnet, was ein Ablesen der wirkenden Setzkraft am Kontrollelement erleichtert bzw. in Abhängigkeit von der Einbausituation erst ermöglicht. Insbesondere ist auch die zweite der Markierungen auf einer Grundfläche eines der Spannelemente angeordnet, vorzugsweise auf dem Spannelement und insbesondere auf der Grundfläche, an der die erste Markierung angeordnet ist, was das Ablesen ebenfalls erleichtert. Vorzugsweise ist die erste Markierung an einem der Spannelemente ortsfest angeordnet. Insbesondere ist auch die zweite Markierung ortsfest zu dem Spannelement bzw. zu der Grundfläche, an der sie angeordnet ist. Insbesondere sind beide Markierungen auf dem ersten Spannelement angeordnet. Alternativ können sie beispielsweise auf einer der Grundflächen des zweiten Spannelements angeordnet sein.

Insbesondere weist die erste Markierung einen Abstand von der Längsachse der Durchgangsöffnungen auf, der größer ist, als der Durchmesser einer dem Befestigungselement zugeordneten Stecknuss, wie sie zum Anziehen einer Mutter oder einer Schraube mit Schlüsselflächen üblicherweise verwendet werden. Insbesondere ist der Abstand der Markierung der minimal zu erreichenden Setzkraft im Wesentlichen gleich oder größer als die Schlüsselweite der Stecknuss multipliziert mit dem Faktor 1,2 plus 2 Millimeter, insbesondere plus 3 Millimeter. Beispielsweise weist das Befestigungselement eine M8-Schraube mit einem Sechskant der Schlüsselweite 13 Millimeter auf. Der Abstand der ersten Markierung zur Längsachse ist somit größer als 1,2 x 13 Millimeter + 2 Millimeter = 17,6 Millimeter, so dass eine typische Stecknuss mit Schlüsselweite 13 die erste Markierung nicht verdeckt. Somit ist es möglich, die Markierungen bzw. das Anzeigeelement beim Verspannen eines Befestigungselements, das Schlüsselflächen zum Verspannen durch Drehen, beispielsweise durch Drehen einer Mutter oder einer Schraube aufweist, auch dann abzulesen, wenn das Befestigungselement mit einem Steckschlüssel, der beispielsweise an einem Elektroschrauber oder einer Ratsche angeordnet ist, verspannt wird.

Weiterhin ist bevorzugt, dass der Rand oder eine weitere Markierung auf dem Spannelement, auf dem die erste Markierung nicht angeordnet ist, als Anzeigeelement mit der ersten Markierung zusammenwirkt. Dies erleichtert das Ablesen des Kontrollelements. Der Anwender erkennt durch einen Vergleich der Lage des Anzeigeelements und der Lage der Markierung bzw. der Markierungen, ob eine minimale Setzkraft erreicht bzw. eine maximale Setzkraft überschritten ist.

Vorzugsweise weist das erste Spannelement mindestens einen radial verlaufenden Schlitz auf. Der Schlitz kann als Markierung und/oder als Anzeigeelement wirken. Er kann insbesondere auch zur Einstellung der Federsteifigkeit und/oder des Verformungsverhaltens des gewölbten Spannelements beim Verspannen verwendet werden, derart, dass durch die axiale Bewegung des gewölbten Spannelements beim Verspannen eine hinreichend große Änderung des Durchmessers des ersten Spannelements erreicht wird, so dass die Markierungen so weit voneinander beabstandet angeordnet werden können, dass ein einfaches und eindeutiges Ablesen des Kontrollelements durch einen Anwender möglich ist.

Bei einer weiteren bevorzugten Ausgestaltungsform des erfindungsgemäßen Kontrollelements ist das erste Spannelement im Grundzustand derart gewölbt, dass es auch noch beim Erreichen der maximal zu erreichenden Spannkraft bzw. der maximal zu erreichenden Setzkraft eines zugeordneten Befestigungselements gewölbt ist. Dadurch ist gewährleistet, dass beim weiteren Verspannen ein Verformen des ersten Spannelements erfolgt, wodurch die Markierung der maximal zu erreichenden Spannkraft überschritten werden kann, was nicht möglich ist, wenn das erste Spannelement beim Erreichen der maximal zu erreichenden Spannkraft eben gedrückt wäre.

Weiterhin ist bevorzugt, dass das erste Spannelement in einem unverspannten Grundzustand einen größeren Durchmesser aufweist, als das zweite Spannelement. Somit kann das zweite Spannelement innerhalb des gewölbten ersten Spannelements liegen, wodurch das zweite Spannelement, bezogen auf die Längsachse der Durchgangsöffnung, zum ersten Spannelement zentriert ist, sodass die Durchgangsöffnungen konzentrisch aufeinander liegen. Dadurch werden Ableseungenauigkeiten, die sich durch eine ungleiche Lage der Spannelemente zur Längsachse ergeben könnten, reduziert. beziehungsweise ausgeschlossen.

Vorzugsweise sind die Grundflächen des zweiten Spannelements im Wesentlichen eben. Insbesondere ist das zweite Spannelement eine genormte oder normähnliche Unterlegscheibe oder eine genormte oder normähnliche Mutter mit angeprägter Unterlegscheibe, sodass für das zweite Spannelement ein kostengünstiges Standardelement verwendet werden kann.

Das erfindungsgemäße Kontrollelement bildet mit einem Befestigungselement eine Befestigungsanordnung. Das Befestigungselement kann beispielsweise eine Schraube sein, beispielsweise eine metrische Schraube, wie sie im Stahlbau zur Bildung vorgespannter Verbindungen verwendet wird. Insbesondere handelt es sich bei dem Befestigungselement um einen Spreizanker, insbesondere um einem kraftkontrolliert aufspreizbaren Spreizanker, beispielsweise einen sogenannten Bolzenanker oder um einen Hülsenanker.

Die Erfindung wird nachfolgend anhand von zwei in der Zeichnung dargestellten Ausführungsbeispielen näher erläutert.

Es zeigen:
- Figur 1: eine erste Befestigungsanordnung mit einem ersten erfindungsgemäßen Kontrollelement in einer perspektivischen Ansicht;
- Figur 2: die erste Befestigungsanordnung der Figur 1 in einer Draufsicht;
- Figur 3: eine zweite Befestigungsanordnung mit einem zweiten erfindungsgemäßen Kontrollelement in einer perspektivischen Ansicht; und
- Figur 4: das erste Spannelement der zweiten Befestigungsanordnung der Figur 3 in einer Draufsicht.

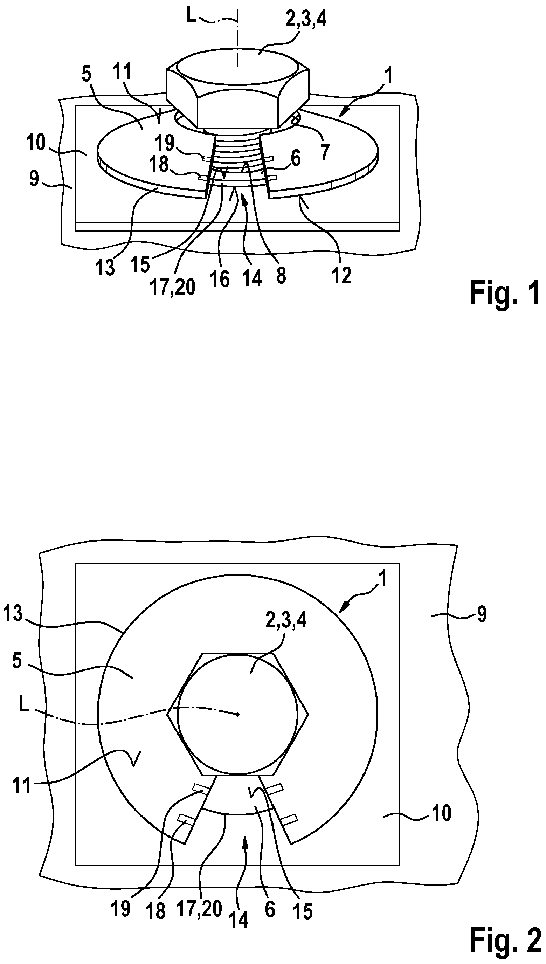

In den Figuren 1 und 2 ist eine erste Befestigungsanordnung mit einem ersten erfindungsgemäßen Kontrollelement 1 mit Spannkraftkontrolle dargestellt. Das Kontrollelement 1 dient zur Setzkraftkontrolle eines Befestigungselements 2, hier eines Hülsenankers, der in einem Verankerungsgrund 9 verankert ist. Von dem Hülsenanker ist in den Figuren 1 und 2 nur eine Schraube 3 mit einem Sechskantkopf 4 zu sehen. Mit dem Befestigungselement 2 ist ein Anbauteil 10 an dem Verankerungsgrund 9 befestigt und mit einer Vorspannkraft gegen den Verankerungsgrund 9 verspannt. Das Kontrollelement 1 umfasst ein erstes Spannelement 5 und ein zweites Spannelement 6.

Das erste Spannelement 5 hat die Form einer Tellerfeder, einer gewölbten, runden Scheibe, während das zweite Spannelement 6 eine runde, ebene Scheibe ist. Beide Spannelemente 5, 6 weisen jeweils eine runde Durchgangsöffnung 7, 8 auf, durch die der Schaft der Schraube 3 entlang der Längsachse L der Durchgangsöffnungen 7, 8 durchgeführt ist.

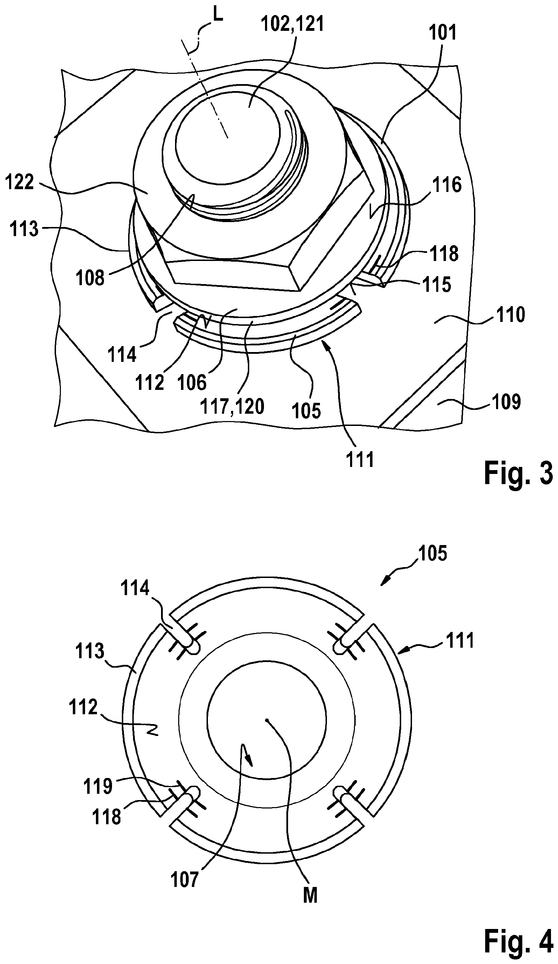

Das erste Spannelement 5 weist eine erste Grundfläche 11 und eine zweite Grundfläche 12 auf. Da das erste Spannelement 5 in sich tellerfederartig räumlich gewölbt ist, ist die erste, dem Sechskantkopf 4 zugewandte Grundfläche 11 konvex und die zweite Grundfläche 12 des ersten Spannelements 5, die dem zweiten Spannelement 6 zugewandt ist, konkav gewölbt. Zudem weist das erste Spannelement 5 einen umlaufenden, kreisförmigen Rand 13 auf, der durch einen einzigen, das erste Spannelement 5 vom Rand 13 bis zur Durchgangsöffnung 7 vollständig und durchdringenden, bezogen auf die Längsachse L radialen Schlitz 14 auf, der ein Aufweiten des ersten Spannelements 5 beim Verspannen der Befestigungsanordnung erleichtert. Auch das zweite Spannelement 6 umfasst eine erste Grundfläche 15, die dem ersten Spannelement 5 zugewandt ist, eine zweite Grundfläche 16, die dem Anbauteil 10 zugewandt ist, sowie einen umlaufenden, kreisförmigen Rand 17. Bei beiden Spannelementen 5, 6 durchdringen die Durchgangsöffnungen 7, 8 die Grundflächen 11, 12, 15, 16 mittig. Die Längsachse L verläuft mittig durch den Mittelpunkt M der Durchgangsöffnungen 7, 8 (vgl. Figur 4).

Das zweite Spannelement 6 ist eine genormte Unterlegscheibe, deren Grundflächen 15, 16 im Wesentlichen eben sind und die einen Durchmesser aufweist, der in einem Grundzustand (nicht dargestellt), in dem das Befestigungselement 2 noch nicht gegen das Anbauteil 10 und den Verankerungsgrund 9 verspannt ist, einen kleineren Durchmesser als das gewölbte erste Spannelement 5 aufweist, so dass das zweite Spannelement 6 bereits in diesem Grundzustand in der konkaven Wölbung der zweiten Grundfläche 12 des ersten Spannelements 5 liegt, wobei die beiden Spannelemente 5, 6 gemeinsam zur Längsachse L ausgerichtet und zentriert sind. Im Grundzustand liegt das zweite Spannelement 6 derart mit dem Rand 17 an dem ersten Spannelement 5 an, dass der Rand 17 des zweiten Spannelements 6, das sich am Anbauteil 10 abstützt, als Widerlager für das erste Spannelement 5 wirkt, so dass die zweite Grundfläche 12 des ersten Spannelements 5 beim Verspannen aufgrund einer axialen Bewegung des ersten Spannelements 5 gegenüber dem zweiten Spannelement 6 über den Rand 17 des zweiten Spannelements gleitet, wodurch das erste Spannelement 5 aufgeweitet wird, sich der Durchmesser des ersten Spannelements 5 vergrößert und das erste Spannelement 5 axial gestaucht wird.

Das erste Spannelement 5 weist an seiner ersten Grundfläche 11 im Bereich des Schlitzes 14 zwei Markierungen 18, 19 auf, die gemeinsam mit dem Rand 17 des zweiten Spannelements 6 zur Anzeige der im Befestigungselement 2 wirkenden Setzkraft zusammenwirken. Der Rand 17 bildet ein Anzeigeelement 20. Die beiden Markierungen 18, 19 sind als Nuten an der ersten Grundfläche 11 des ersten Spannelements 5 ortsfest und gegeneinander unverschiebbar angeordnet. Beim Verspannen und dem daraus resultierenden Aufweiten des Spannelements 5 werden die Markierungen 18, 19 im Bereich des Schlitzes 14 radial nach außen bewegt. Die erste Markierung 18 markiert dabei eine minimal zu erreichende Spannkraft, die einer minimal zu erreichenden Setzkraft des Befestigungselements 2 entspricht. Das bedeutet, dass die zum planmäßigen Verankern des als Befestigungselement 3 im Verankerungsgrund 9 eingebrachten Hülsenankers erforderliche minimale Setzkraft dann erreicht ist, wenn die erste Markierung 18 auf dem Rand 17 des zweiten Spannelements 6 liegt oder dass sie überschritten ist, wenn die erste Markierung 18 über den Rand 17 des zweiten Spannelements 6 nach außen geschoben ist. Dagegen markiert die zwischen der ersten Markierung 18 und der Längsachse L angeordnete zweite Markierung 19 eine maximal zu erreichende Spannkraft, die der Setzkraft entspricht, die zur planmäßigen Verankerung des Befestigungselements 3 nicht überschritten werden darf. In den Figuren 1 und 2 ist die Befestigungsanordnung nach dem Verspannen und Erreichen der planmäßigen Setzkraft dargestellt. Der Rand 17 des zweiten Spannelements 6 liegt als Anzeigeelement 20 in radialer Richtung zwischen der ersten Markierung 18 und der zweiten Markierung 19. In diesem planmäßig verspannten Zustand ist das erste Spannelement 5 weiterhin gewölbt, so dass es durch weiteres Verspannen weiter axial gestaucht und radial weiter über den Rand 17 des zweiten Spannelements 6 geschoben werden kann, so dass die zweite Markierung 19 über den Rand 17 gleiten kann, wodurch die Anzeige einer zu großen Setzkraft möglich ist.

In den Figuren 3 und 4 ist eine Befestigungsanordnung mit einem alternativen Kontrollelement 101 dargestellt. Um Wiederholungen zu vermeiden, werden im Folgenden nur die wesentlichen Unterschiede zur Befestigungsanordnung der Figuren 1 und 2 dargestellt.

In der Befestigungsanordnung der Figuren 3 und 4 ist ein Bolzenanker als Befestigungselement 102 in einem Verankerungsgrund 109 verankert. Eine auf einen Gewindebolzen 121 des Bolzenankers aufgedrehte Mutter 122, an die das zweite, ebene Spannelement 106 einstückig angeprägt ist, verspannt das gewölbte erste Spannelement 105 sowie das Anbauteil 110 gegen den Verankerungsgrund 109. Das erste Spannelement 105 weist ebenfalls eine konvexe erste Grundfläche 111, die zum Anbauteil 110 hin gerichtet ist, sowie eine konkave Grundfläche 110 auf, an der das zweite, im Durchmesser kleinere Spannelement 106 anliegt und gegen das sie mit ihrem Rand 117 verspannt ist. Das erste Spannelement 105 weist vier Schlitze 114 auf, die ein Verformen des ersten Spannelements 105 beim Verspannen ermöglichen. Wie in Figur 4 zu sehen ist, sind an jedem Schlitz 114 Teilmarkierungen der Markierungen 118, 119 an der zweiten, konkav gewölbten Grundfläche 112 des ersten Spannelements 105 als farbig markierte Linien angeordnet. Beim Verspannen werden die Markierungen 118, 119 relativ zur Längsachse L und zum Rand 117 des zweiten Spannelements 106 nach außen bewegt, so dass im Grundzustand (nicht dargestellt) keine Markierung und nach dem Erreichen einer minimalen zu erreichenden Setzkraft des Befestigungselements 102 die erste Markierung 118 über den Rand 117 des zweiten Spannelements 106 derart übersteht, dass sie von einen Anwender wahrgenommen werden kann, wie dies in Figur 3 der Fall ist. Sobald die erste Markierung 118 sichtbar ist, wird ein Anwender das Verspannen beenden. Wie in Figur 3 zu sehen, ist die zweite Markierung 119 beim planmäßigen Verspannen der Befestigungsanordnung für einen Anwender noch nicht sichtbar. Der Anwender weiß somit, dass die minimale Setzkraft erreicht, die maximal zulässige Setzkraft aber noch nicht überschiritten und somit die Befestigungsanordnung planmäßig verspannt ist.

In beiden Ausführungsbeispielen ist der Abstand der ersten Markierung 18, 118 von der Längsachse L größer als 25 Millimeter, also mehr als 2 Millimeter größer als die 1,2-fache Schlüsselweite des Sechskantkopfs 4 bzw. der Mutter 122, die in dem dargestellten Ausführungsbeispielen 19 Millimeter beträgt. Somit ist gewährleistet, dass eine dem Befestigungselement 2, 102 zugeordnete Stecknuss, die auf eine Ratsche oder einen Elektro-Schrauber aufgesteckt ist, die erste Markierung 18, 118 beim Verspannen nicht verdeckt.

Zudem ist der Abstand zwischen der ersten Markierung 18, 118 und der zweiten Markierung 19, 119 so gewählt und auf das zulässige Toleranzfeld der zulässigen Setzkraft des Befestigungselement 2, 102 so abgestellt, dass einem Anwender von Zeitpunkt, an dem er die erste Markierung 18, 118 wahrnimmt, bis zum Abstellen der Drehbewegung, in der kein weiteres Verspannen erfolgen darf, eine ausreichend große Reaktionszeit bleibt, so dass die maximal zu erreichende Setzkraft nicht überschritten wird.

Beide Ausführungsbeispiele zeichnen sich durch einen einfachen und robusten Aufbau aus. Die Kontrollelemente 1, 101 sind gut ablesbar, kostengünstig herstellbar und aufgrund ihrer robusten Auslegung gut für den Baustelleneinsatz geeignet.

### Bezugszeichenliste

### Kontrollelement mit Spannkraftkontrolle und Befestigungsanordnung

- 1, 101: Kontrollelement
- 2, 102: Befestigungselement
- 3: Schraube
- 4: Sechskantkopf
- 5, 105: erstes Spannelement
- 6, 106: zweites Spannelement
- 7, 107: Durchgangsöffnung des ersten Spannelements 5, 105
- 8, 108: Durchgangsöffnung des zweiten Spannelements 6, 106
- 9, 109: Verankerungsgrund
- 10, 110: Anbauteil
- 11, 111: erste Grundfläche des ersten Spannelements 5, 105
- 12, 112: zweite Grundfläche des ersten Spannelements 5, 105
- 13, 113: Rand des ersten Spannelements 5, 105
- 14, 114: Schlitz
- 15, 115: erste Grundfläche des zweiten Spannelements 6, 106
- 16, 116: zweite Grundfläche des zweiten Spannelements 6, 106
- 17, 117: Rand des zweiten Spannelements 6, 106
- 18, 118: erste Markierung
- 19, 119: zweite Markierung
- 20, 120: Anzeigeelement
- 121: Gewindebolzen
- 122: Mutter
- L: Längsachse
- M: Mittelpunkt

## Patentansprüche

1. Kontrollelement (1, 101) mit Spannkraftkontrolle, das ein erstes Spannelement (5, 105) und ein zweites Spannelement (6, 106) umfasst, die mittels eines Befestigungselements (2, 102) gegeneinander verspannbar sind,
wobei jedes Spannelement (5, 6, 105, 106) eine Durchgangsöffnung (7, 8, 107, 108) für das Befestigungselement (2, 102) sowie zwei Grundflächen (11, 111, 12, 112, 15, 115, 16, 116) und einen umlaufenden Rand (13, 17, 113, 117) aufweist, wobei die Durchgangsöffnung (7, 8, 107, 108) die Grundflächen (11, 12, 111, 112, 15, 115, 16, 116) durchdringt,
wobei das erste Spannelement (5, 105) in einem unverspannten Grundzustand gewölbt ist, derart, dass eine seiner Grundflächen (12, 112) konkav und seine andere Grundfläche (11, 111) konvex ist,
wobei die konkave Grundfläche (12, 112) des ersten Spannelements (5, 105) dem zweiten Spannelement (6, 106) zugewandt ist und in einem Grundzustand derart an dem zweiten Spannelement (6, 106) anliegt, dass sich der Durchmesser des ersten Spannelements (5, 105) vergrößert, wenn die Spannelemente (5, 6, 105, 106) gegeneinander verspannt werden,
**dadurch gekennzeichnet,**
**dass** an den Spannelementen (5, 6, 105, 106) zwei Markierungen (18, 118, 19, 119) angeordnet sind, derart, dass eine der Markierungen (18, 118) eine minimal zu erreichende Spannkraft und die andere Markierung (19, 119) eine maximal zu erreichende Spannkraft markiert.

2. Kontrollelement nach Anspruch 1, **dadurch gekennzeichnet, dass** eine erste Markierung (18, 118) auf einer Grundfläche (11, 111) eines der Spannelemente (5, 105) angeordnet ist.

3. Kontrollelement nach Anspruch 1 oder 2, **dadurch gekennzeichnet, dass** die erste Markierung (18, 118) auf einem der Spannelemente (5, 105) ortsfest angeordnet ist.

4. Kontrollelement nach einem der Ansprüche 1 bis 3, **dadurch gekennzeichnet, dass** auf dem Spannelement (5, 105), an dem die erste Markierung (18, 118) angeordnet ist, auch die zweite Markierung (19, 119) angeordnet ist.

5. Kontrollelement nach einem der Ansprüche 1 bis 4, **dadurch gekennzeichnet, dass** der Rand (17, 117) oder eine weitere Markierung auf dem Spannelement (6, 106), an dem die erste Markierung (18, 118) nicht angeordnet ist, als Anzeigeelement (20, 120) mit der ersten Markierung (18, 118) zusammenwirkt.

6. Kontrollelement nach einem der Ansprüche 1 bis 5, **dadurch gekennzeichnet, dass** das erste Spannelement (5, 105) mindestens einen radial verlaufenden Schlitz (14, 114) aufweist.

7. Kontrollelement nach einem der Ansprüche 1 bis 6, **dadurch gekennzeichnet, dass** das erste Spannelement (5, 105) im unverspannten Grundzustand derart gewölbt ist, dass es auch noch beim Erreichen der maximal zu erreichenden Spannkraft gewölbt ist.

8. Kontrollelement nach einem der Ansprüche 1 bis 7, **dadurch gekennzeichnet, dass** das erste Spannelement (5, 105) in dem unverspannten Grundzustand einen größeren Durchmesser aufweist als das zweite Spannelement (6, 106).

9. Kontrollelement nach einem der Ansprüche 1 bis 8, **dadurch gekennzeichnet, dass** die Grundflächen (15, 115, 16, 116) des zweiten Spannelements (6, 106) im Wesentlichen eben sind.

10. Befestigungsanordnung mit einem Kontrollelement (1, 101) nach einem der Ansprüche 1 bis 9 und mit einem Befestigungselement (2, 102), insbesondere mit einem kraftkontrolliert aufspreizbaren Spreizanker.
